# EUROPÄISCHE PATENTSCHRIFT

(11) **EP 4 047 499 B1**
(45) Veröffentlichungstag und Bekanntmachung des Hinweises auf die Patenterteilung: **13.05.2026**
(21) Anmeldenummer: 21157521.2
(22) Anmeldetag: 17.02.2021
(51) Int. Cl.: G06F 21/62, G06F 21/32, G06F 21/33, G06F 3/16, B60R 16/037, G10L 15/22, G10L 17/00

(54) **VERFAHREN ZUR SPRACHSTEUERUNG, SYSTEM ZUR SPRACHSTEUERUNG SOWIE FAHRZEUG MIT EINEM SYSTEM ZUR SPRACHSTEUERUNG**
VOICE CONTROL METHOD, VOICE CONTROL SYSTEM AND VEHICLE WITH VOICE CONTROL SYSTEM
PROCÉDÉ DE COMMANDE VOCALE, SYSTÈME DE COMMANDE VOCALE, AINSI QUE VÉHICULE DOTÉ D'UN SYSTÈME DE COMMANDE VOCALE

(43) Veröffentlichungstag der Anmeldung: 24.08.2022
(73) Patentinhaber: AUMOVIO Germany GmbH, 60488 Frankfurt am Main (DE)
(72) Erfinder: Hellert, Christian, 90411 Nürnberg (DE); Loyal, Antje Elisabeth, 90411 Nürnberg (DE)
(74) Vertreter: Aumovio Corporation

(56) Entgegenhaltungen:
- CH-A1- 710 525
- DE-A1- 102016 217 026
- DE-B4- 102016 212 647
- US-A1- 2019 080 692

## Beschreibung

### Gebiet der Erfindung

Die Erfindung betrifft ein Verfahren zur Sprachsteuerung, insbesondere in einem Fahrzeug, ein System zur Sprachsteuerung, insbesondere in einem Fahrzeug, sowie ein Fahrzeug mit einem System zur Sprachsteuerung.

### Hintergrund

Verfahren und Systeme zur Sprachsteuerung sind aus dem Stand der Technik bekannt. Dabei werden beispielsweise Entertainment-Funktionen in einem Fahrzeug oder bestimmte Funktionen eines Smartphones oder Computers mittels Spracheingaben gesteuert. Ein besonderer Fall der Sprachsteuerung tritt ein, wenn mehrere Benutzer diese Sprachsteuerung ausführen können.

So beschreibt beispielsweise die US-Patentanmeldung US 2019/0080692 A1 eine Einrichtung, die das gleichzeitige Erkennen und Verarbeiten mehrerer Reden von mehreren Benutzern erleichtert. Hierzu werden zumindest zwei Mikrofone und eine Beamforming-Logik eingesetzt.

Problematisch wird die Sprachsteuerung von mehreren Benutzern, wenn beispielsweise zwei oder mehr Benutzer unterschiedliche und auch entgegengesetzte Spracheingaben machen. Von besonderer Bedeutung wird dieser Umstand, wenn es sich um sicherheitsrelevante Spracheingaben handelt, beispielsweise bei einem Fahrzeug mit autonomen oder teilautonomen Fahrfunktionen. Entgegengesetzte Spracheingaben oder auch Spracheingaben von nicht autorisierten Benutzern können hier zu gefährlichen Situationen führen. Dieser Aspekt wird jedoch im Stand der Technik nicht beschrieben.

### Zusammenfassung

Es ist die Aufgabe der Erfindung, die Nachteile des Stands der Technik zu überwinden und insbesondere die Sprachsteuerung durch mehrere Benutzer zu verwalten. Diese Aufgabe wird durch den Gegenstand der unabhängigen Patentansprüche gelöst. Weiterbildungen der Erfindung ergeben sich aus den Unteransprüchen und der folgenden Beschreibung. Der Schutzbereich wird durch die anhängenden Ansprüche bestimmt.

Ein Aspekt der Erfindung betrifft ein Verfahren zur Sprachsteuerung. Unter Sprachsteuerung wird dabei die Steuerung von Funktionen eines Geräts, einer Maschine oder einer Vorrichtung mittels Spracheingaben verstanden. Insbesondere betrifft die Erfindung ein Verfahren zur Sprachsteuerung in einem Fahrzeug. Hierbei kann es sich um ein Land-, Wasser- und/oder Luftfahrzeug handeln, insbesondere um einen Personenkraftwagen oder einen Bus. Die steuerbaren Funktionen können dabei sehr vielfältig sein. Im Falle eines Fahrzeugs können beispielsweise Entertainment-Funktionen wie eine Musikwiedergabe oder Telefonie, aber auch Fahrfunktionen wie die Geschwindigkeitseinstellung eines Tempomaten oder Funktionen des teilautonomen oder autonomen Fahrens gesteuert werden.

Dabei können sich in einem vorgegebenen Bereich Benutzer befinden. Der vorgegebene Bereich kann dabei beispielsweise ein Raum oder eine Mehrzahl an Räumen sein. Bei der Mehrzahl an Räumen ist es dabei sowohl denkbar, dass diese Räume benachbart sind als auch, dass sie voneinander entfernt sind. Im Falle einer Sprachsteuerung in einem Fahrzeug handelt es sich beim vorgegebenen Bereich insbesondere um einen Fahrzeuginnenraum oder auch um mehrere voneinander abgetrennte Fahrgastzellen.

Bei dem Verfahren wird eine Identifikation von Benutzern durchgeführt. Hierbei können einige oder alle der Benutzer, die sich im vorgegebenen Bereich befinden, identifiziert werden. Hierzu werden Merkmale der Benutzer erfasst und die erfassten Merkmale mit in einer Datenbank gespeicherten Merkmalen von registrierten Benutzern verglichen. Dabei wird ein Benutzer entweder als registrierter Benutzer erkannt oder, wenn der Benutzer in der Datenbank noch nicht registriert ist, als unbekannter Benutzer eingestuft. Diese Identifikation wird für jeden im vorgegebenen Bereich befindlichen Benutzer wiederholt. Die Identifikation der Benutzer erfolgt dabei rechnergestützt, beispielsweise mittels Deep Learning und wird von einer Rechnereinheit durchgeführt.

Jedem Benutzer werden sodann in Abhängigkeit von der Identifikation der Benutzer Zugriffsrechte zugeordnet. Die Zugriffsrechte umfassen dabei die Berechtigung von Benutzern zur Ausführung von Sprachbefehlen. Die Zugriffsrechte können dabei beispielsweise für jede einzelne Funktion, die über Sprachbefehle steuerbar ist, und/oder für Gruppen von Funktionen vergeben werden. Dabei geben die Zugriffsrechte jeweils an, ob eine Funktion oder eine Gruppe von Funktionen von einem Benutzer ausführbar ist, nicht ausführbar ist, oder nur unter vorbestimmten Umständen ausführbar ist. Zusätzlich dazu können die Zugriffsrechte eine Priorisierung der einzelnen Benutzer umfassen, wobei die Priorisierung allgemein für alle Funktionen oder funktionenspezifisch sein kann. Die Priorisierung kann beispielsweise ein numerischer Wert sein, der einem Benutzer eine umso höhere Priorität gibt, je höher der Wert ist. Werden beispielsweise von zwei Benutzern entgegengesetzte Sprachbefehle erteilt (z.B. "Fahrgeschwindigkeit erhöhen" und "Fahrgeschwindigkeit verringern"), dann wird der Sprachbefehl desjenigen Benutzers ausgeführt, der die höhere Priorität hat. Sollten beide Benutzer die gleiche Priorität haben, kann beispielsweise eine Rückfrage gestellt werden oder die Sprachbefehle verworfen werden.

Des Weiteren werden bei dem Verfahren Audiosignale mittels zumindest eines Mikrofons erfasst. Mikrofon ist dabei ganz allgemein als Schallwandler, der Luftschall in ein maschinenlesbares Signal, insbesondere ein elektrisches Signal, verwandelt, zu verstehen. Das Erfassen der Audiosignale erfolgt dabei vorzugsweise nach der Identifikation der Benutzer, so dass nach dem Erfassen der Audiosignale nicht noch Zeit für die Identifikation des Benutzers verbraucht wird. So kann beispielsweise vor Beginn oder zu Beginn einer Fahrt mit einem Fahrzeug die Identifikation der Benutzer durchgeführt werden. Es ist jedoch auch denkbar, dass, insbesondere wenn die Anzahl der Benutzer sehr groß ist und/oder die Benutzer, die sich im vorgegebenen Bereich befinden, häufig wechseln, die Identifikation der Benutzer erst nach dem Erfassen der Audiosignale durchgeführt wird.

Die erfassten Audiosignale werden sodann bearbeitet. Dabei werden die Audiosignale den einzelnen Benutzern zugeordnet. Diese Zuordnung erfolgt dabei auf Grundlage der erfassten Audiosignale und kann durch Signale von weiteren Detektoren, beispielsweise Kameras, unterstützt werden. Die Audiosignale werden dabei beispielsweise hinsichtlich ihres Frequenzspektrums ausgewertet. Ist mehr als ein Mikrofon vorgesehen, so können aus den unterschiedlichen Laufzeiten der Audiosignale auf eine Position des Benutzers im vorgegebenen Bereich geschlossen werden. Und mittels einer Kamera - vorzugsweise einer Nahinfrarotkamera mit einer Nahinfrarotlichtquelle, so dass sie auch bei dunklen Lichtverhältnissen verwertbare Bilder liefert - können beispielsweise Lippenbewegungen der einzelnen Benutzer erfasst werden, wobei dann eine Korrelation zwischen den Lippenbewegungen und den Audiosignalen die Audiosignale den einzelnen Benutzern zuordnet. Die genannten Schritte zur Zuordnung der Audiosignale können, einzeln oder in Kombination, auch mittels künstlicher Intelligenz, beispielsweise mittels eines Deep Learning Verfahrens, von der Rechnereinheit durchgeführt werden.

Des Weiteren werden die Audiosignale in maschinenlesbare Form konvertiert. Diese Konvertierung kann beispielsweise mittels Natural Language Processing von der Rechnereinheit durchgeführt werden.

Ferner wird eine Analyse der Audiosignale auf Sprachbefehle durchgeführt. Diese Analyse kann beispielsweise auf Basis der in maschinenlesbare Form konvertierten Audiosignale durchgeführt werden. Es ist aber auch denkbar, dass die Analyse der Audiosignale auf Sprachbefehle in Kombination mit der Konvertierung der Audiosignale in maschinenlesbare Form durchgeführt wird. Im letzteren Fall werden dann insbesondere die Sprachbefehle aus dem Audiosignal extrahiert. Auch dieser Schritt wird vorzugsweise mittels künstlicher Intelligenz von der Rechnereinheit durchgeführt.

Erkannte Sprachbefehle werden dann auf die Zugriffsrechte des Benutzers, dem der Sprachbefehl zugeordnet wurde, geprüft. Es wird also geprüft, ob die Zugriffsrechte des Benutzers die Ausführung der im Sprachbefehl angesprochenen Funktion erlaubt oder nicht. Falls die Zugriffsrechte eine Ausführung der Sprachbefehle zulassen, werden die Sprachbefehle zur Ausführung angeordnet. Hierzu wird beispielsweise ein Signal zur Ausführung an einen dementsprechenden Controller gesendet.

Über die Zugriffsrechte werden also die Sprachbefehle von Benutzern im vorgegebenen Raum verwaltet. Nur Benutzer, die auch eine entsprechende Berechtigung haben, können daher auch bestimmte Funktionen mittels eines Sprachbefehls ausführen. Sollte es sich bei den Funktionen um sicherheitsrelevante Funktionen handeln, ist hierdurch auch die Sicherheit erhöht, da nur entsprechend berechtigte Benutzer auch diese Funktionen ausführen können.

In einigen Ausführungsformen wird die Identifikation der Benutzer mittels Bilder, insbesondere im Bereich des sichtbaren Spektrums und/oder im Nahinfrarot durchgeführt. Sichtbares Licht hat dabei Wellenlängen von etwa 380 nm bis 780 nm und Nahinfrarot Wellenlängen von etwa 780 nm bis 3,0 µm. Der Vorteil des sichtbaren Lichts ist dabei, dass auch Farbinformationen zur Identifikation der Benutzer verwendet werden können. Mittels Nahinfrarotkameras und einer entsprechenden Nahinfrarotlichtquelle können hingegen auch bei Dunkelheit Aufnahmen gemacht werden, ohne die Benutzer zu blenden und damit zu stören. Für die Identifikation mittels der Bilder werden dabei beispielsweise charakteristische Merkmale, insbesondere des Gesichts, erfasst. Alternativ oder zusätzlich zur Identifikation der Benutzer mittels Bilder kann die Identifikation auch mittels Audiosignalen durchgeführt werden. Dabei werden beispielsweise die für jeden Benutzer charakteristische Stimmlage und/oder Aussprache analysiert. Eine Kombination der beiden Identifikationsmethoden liefert dabei ein zuverlässigeres Ergebnis.

In einigen Ausführungsformen wird jedem Benutzer ein Merkmalsvektor zugeordnet. Dieser Merkmalsvektor kann visuelle Merkmale umfassen. Dabei sind visuelle Merkmale alle möglichen Merkmale, die aus einem oder mehreren Bildern des Benutzers extrahiert werden können. Eine derartige Extraktion von visuellen Merkmalen aus einem oder mehreren Bildern wird dabei vorzugsweise mittels künstlicher Intelligenz, beispielsweise mittels eines Convolutional Neural Networks der Rechnereinheit, durchgeführt. Alternativ oder zusätzlich dazu kann der Merkmalsvektor auch semantische Merkmale umfassen. Dabei sind semantische Merkmale als solche Merkmale definiert, die von einem Menschen auf den Bildern erkannt werden können, beispielsweise ungefähres Alter, Augenfarbe oder Augenabstand. Die semantischen Merkmale können dabei beispielsweise automatisch aus den visuellen Merkmalen über eine Gesichtsidentifikation extrahiert werden. Alternativ oder zusätzlich zu den visuellen und semantischen Merkmalen kann der Merkmalsvektor auch auditive Merkmale umfassen. Auditive Merkmale können dabei beispielsweise eine Stimmlage, eine Aussprache und/oder einen Akzent des Benutzers umfassen. Eine Analyse der auditiven Merkmale kann dabei beispielsweise mittels einer Short-time Fourier Transformation und/oder mittels künstlicher Intelligenz durch die Rechnereinheit erfolgen. Es ist denkbar, dass der Merkmalsvektor auch noch weitere Merkmale umfasst, beispielsweise dreidimensionale Informationen über den Benutzer, die z.B. mittels einer Stereokamera oder über die Analyse einer Mehrzahl von Bildern des Benutzers in unterschiedlichen Posen ermittelt werden, und/oder Informationen über das Gewicht des Benutzers, die z.B. über Drucksensoren im vorgegebenen Bereich erfasst werden.

Die Identifikation des Benutzers mittels der Merkmalsvektoren wird dann derart durchgeführt, dass im mehrdimensionalen Raum ein Abstand zwischen dem Merkmalsvektor, der dem Benutzer zugeordnet ist, und den in der Datenbank gespeicherten Merkmalsvektoren bestimmt wird. Ist dieser Abstand beispielsweise kleiner als eine vorgegebene oder eine vom System justierbare Schwelle, dann wird der Benutzer als einer der aus der Datenbank bekannten Benutzer erkannt.

In einigen Ausführungsformen wird eine Änderung der Benutzer erfasst. Eine Änderung ist dabei beispielsweise ein Wechsel der Position innerhalb des vorgegebenen Bereichs, ein Verlassen des vorgegebenen Bereichs oder ein Hinzukommen in den vorgegebenen Bereich. Eine solche Änderung kann beispielsweise mittels eines Drucksensors erfasst werden, der in einem Sitz des vorgegebenen Bereichs eingebaut ist. Eine Verringerung des Drucks deutet dabei darauf hin, dass der Benutzer seinen Sitz verlassen hat, während ein Anstieg des Drucks darauf hindeutet, dass sich ein Benutzer auf den Sitz gesetzt hat. Alternativ oder zusätzlich dazu kann eine Änderung mittels eines Anschnallgurt-Sensors, der einem Anschnallgurt eines Sitzes im vorgegebenen Bereich zugeordnet ist, erfasst werden. Auch hier deutet das Lösen bzw. Anschnallen des Anschnallgurts darauf hin, dass ein Benutzer zumindest seine Position im vorgegebenen Bereich verändert hat. Des Weiteren kann eine derartige Änderung des Benutzers mittels einer Kamera im sichtbaren Spektrum und/oder im Nahinfrarot erfasst werden, wobei hier die von den Kameras aufgenommenen Bilder analysiert werden, beispielsweise mittels eines Gaußschen Mischmodells. Mittels der Kamera kann dabei sowohl ein Wechsel der Position des Benutzers als auch ein Verlassen des vorgegebenen Bereichs oder ein Hinzukommen in den vorgegebenen Bereich erfasst werden. Eine Änderung der Benutzer kann auch durch eine Analyse der Audiosignale erfasst werden. Hierbei werden insbesondere neu hinzugekommene Benutzer erfasst, deren Sprache nicht mit der der bereits im vorgegebenen Bereich anwesenden Benutzer übereinstimmt. Für den Fall, dass ein neuer Benutzer in den vorgegebenen Bereich hinzugekommen ist, wird eine Identifikation des Benutzers - wie oben beschrieben - durchgeführt.

In einigen Ausführungsformen werden einem als registrierten Benutzer erkannten Benutzer in der Datenbank oder in einer Benutzerdatenbank Zugriffsrechte zugeordnet. Sollte ein Benutzer hingegen nicht erkannt werden, so werden diesem unbekannten Benutzer Standardzugriffsrechte zugeordnet.

In einigen Ausführungsformen können die Einträge der Datenbank bzw. der Benutzerdatenbank konfiguriert werden. Insbesondere können dabei die Zugriffsrechte der einzelnen registrierten Benutzer gesetzt werden. Optional können zudem die Standardzugriffsrechte gesetzt werden. Eine derartige Konfiguration kann beispielsweise über eine entsprechende Nutzerschnittstelle erfolgen. Dabei können beispielsweise auch einzelne Benutzer aus der Datenbank bzw. der Benutzerdatenbank entfernt oder die gesamte Datenbank bzw. Benutzerdatenbank zurückgesetzt werden. Im Beispiel eines Fahrzeugs können zum Beispiel Kindern Rechte für die Auswahl der zu spielenden Musik, erwachsenen Beifahrern zusätzlich Rechte zum Öffnen von Fenstern und Türen und dem Fahrer darüber hinaus Rechte für die Steuerung von Fahrfunktionen und/oder dem (teil)autonomen Fahren. Einem Flottenmanager einer Leihwagenflotte können darüber hinaus nochmals weitere Rechte eingeräumt werden.

Zur Konfiguration der Einträge in der Datenbank bzw. Benutzerdatenbank müssen dabei Sicherheitsvoraussetzungen erfüllt sein. So könnte eine Konfiguration bei einem Fahrzeug beispielsweise nur dann möglich sein, wenn sich das Fahrzeug im Stillstand befindet, damit keine Ablenkung durch die Konfiguration entsteht. Des Weiteren könnte eine Konfiguration auch nur direkt im Fahrzeug möglich sein, beispielsweise um Angriffen von nicht autorisierten Personen, wie z.B. Hackern, vorzubeugen. Alternativ oder zusätzlich zu den Sicherheitsvoraussetzungen muss zur Konfiguration der Einträge eine Autorisierung erfüllt sein. So kann eine Konfiguration beispielsweise nur dann möglich sein, wenn ein bestimmter Sicherheitscode eingegeben wird oder wenn sich der konfigurierende Benutzer in Besitz eines Fahrzeugschlüssels befindet.

In einigen Ausführungsformen werden bei der Bearbeitung der Audiosignale Störgeräusche minimiert. Dies kann beispielsweise durch Entfernen von Rauschen erfolgen. Eine weitere Möglichkeit ist die Subtraktion von weiteren Audiosignalen, die über Lautsprecher innerhalb des vorgegebenen Bereichs ausgegeben werden. Musik, die beispielsweise in einem Fahrzeug abgespielt wird, kann somit einfach aus den Audiosignalen entfernt werden.

In einigen Ausführungsformen erfolgt die Bearbeitung der Audiosignale zumindest teilweise mittels Deep Learning durch die Rechnereinheit. Dadurch ist eine besonders gute und robuste Bearbeitung der Audiosignale gegeben. Alternativ oder zusätzlich dazu kann die Bearbeitung der Audiosignale unter Zuhilfenahme des Kontexts eines Gesprächs zwischen den im vorgegebenen Raum befindlichen Benutzern erfolgen. Beschwert sich beispielsweise ein Benutzer im Gespräch darüber, dass ihm kalt sei, so wird der bald darauf folgende Sprachbefehl, die Temperatur zu erhöhen, leichter erkannt werden.

In einigen Ausführungsformen werden die Audiosignale auf vorgegebene Schlüsselwörter durchsucht. Solche Schlüsselwörter, beispielsweise "Hallo, Auto!", sollen dabei einem Sprachbefehl vorausgehen. Die Analyse der Audiosignale auf Sprachbefehle wird dann nur nach einem erkannten Schlüsselwort durchgeführt. So wird unter anderem vermieden, dass zufällig in einer Konversation genannte Sprachbefehle als Sprachbefehle erkannt und ausgeführt werden.

In einigen Ausführungsformen sind die Schlüsselwörter für separate Benutzer individuell vergebbar, es kann also jedem registrierten Benutzer ein eigenes Schlüsselwort zugeordnet werden. Bei der Zuordnung der Audiosignale zu den Benutzern werden dann vorzugsweise - zusätzlich zu den anderen Merkmalen - auch die Schlüsselwörter berücksichtigt. Insbesondere dann, wenn das erkannte Schlüsselwort nicht mit dem erkannten Benutzer übereinstimmt, kann auf die weitere Analyse des Audiosignals verzichtet werden.

In einigen Ausführungsformen wird bei fehlenden Zugriffsrechten für eine Funktion, die mittels Sprachbefehl ausgeführt werden sollte, eine Fehlermeldung ausgegeben. Damit weiß der Benutzer, dass der Sprachbefehl zwar erkannt wurde, die Ausführung der Funktion jedoch auf Grund der mangelnden Zugriffsrechte verweigert wurde. Alternativ oder zusätzlich zur Ausgabe der Fehlermeldung kann bei fehlenden Zugriffsrechten die Verifizierung durch einen berechtigten Benutzer ermöglicht werden. Hierzu kann beispielsweise ein Benutzer, der die entsprechenden Zugriffsrechte für die angeforderte Funktion hat, über einen Sprachbefehl die Ausführung des zuvor zurückgewiesenen Sprachbefehls veranlassen. Des Weiteren können, wenn ein Notfall erkannt wird, Zugriffsrechte auf einen anderen Benutzer übertragen werden und/oder Sprachbefehle auch ohne entsprechende Zugriffsrechte ausgeführt werden. Ein Notfall ist dabei beispielsweise die Schläfrigkeit, Unaufmerksamkeit oder ein medizinischer Notfall eines Benutzers. Verfügt in solch einem Fall kein anderer im vorgegebenen Raum befindlicher Benutzer über notwendige Zugriffsrechte, beispielsweise für Fahrfunktionen eines Fahrzeugs, so findet die Übertragung der Zugriffsrechte auf einen oder mehrere weitere Benutzer statt, um beispielsweise das Fahrzeug anhalten zu können und so einen Unfall zu vermeiden.

In einigen Ausführungsformen wird für einen erkannten Benutzer ein Token erstellt, der die Zugriffsrechte, einen Zeitstempel der Erzeugung des Tokens und/oder eine Lebensdauer des Tokens umfasst. So müssen, zumindest während der Lebensdauer des Tokens, die Zugriffsrechte für den erkannten Benutzer nicht erneut geprüft werden. Verlässt hingegen der erkannte Benutzer den vorgegebenen Bereich, kann der Token vorzeitig gelöscht werden. Um Missbrauch zu vermeiden, ist der Token dabei vorzugsweise verschlüsselt. Bei der Anordnung zur Ausführung eines Befehls, der als Sprachbefehl wie oben beschrieben erkannt wurde, wird der Token mit übermittelt. Ein Controller, der die Funktion ausführen soll, entschlüsselt dann den Token und führt die Funktion aus, sofern die im Token enthaltenen Zugriffsrechte dies zulassen.

Ferner ist es auch möglich, dass der Token zunächst über einen Cloud-Service authentifiziert werden muss, wobei die Authentifizierung mittels eines kabellosen Übertragungsverfahrens, beispielsweise via LTE, erfolgt. Ein Schlüssel zur Verschlüsselung des Tokens ist dabei in der Cloud gespeichert und der Token wird nur bei erfolgreicher Authentifizierung verschlüsselt.

Ein weiterer Aspekt der Erfindung betrifft ein System zur Sprachsteuerung. Unter Sprachsteuerung wird dabei die Steuerung von Funktionen eines Geräts, einer Maschine oder einer Vorrichtung mittels Spracheingaben verstanden. Insbesondere betrifft die Erfindung ein System zur Sprachsteuerung in einem Fahrzeug. Hierbei kann es sich um ein Land-, Wasser- und/oder Luftfahrzeug handeln, insbesondere um einen Personenkraftwagen oder einen Bus. Die steuerbaren Funktionen können dabei sehr vielfältig sein. Im Falle eines Fahrzeugs können beispielsweise Entertainment-Funktionen wie eine Musikwiedergabe oder Telefonie, aber auch Fahrfunktionen wie die Geschwindigkeitseinstellung eines Tempomaten oder Funktionen des teilautonomen oder autonomen Fahrens gesteuert werden. Das System zur Sprachsteuerung ist dabei zum Ausführen des Verfahrens gemäß der vorangegangenen Beschreibung ausgebildet.

Das System zur Sprachsteuerung umfasst dabei zumindest ein Mikrofon zum Erfassen der Audiosignale. Unter Mikrofon ist dabei ganz allgemein ein Schallwandler, der Luftschall in ein maschinenlesbares Signal, insbesondere ein elektrisches Signal, verwandelt, zu verstehen.

Des Weiteren umfasst das System zur Sprachsteuerung zumindest eine Rechnereinheit. Diese Rechnereinheit kann dabei verschiedene Komponenten umfassen, die separat und/oder integriert ausgebildet sind. Beispielsweise kann die Rechnereinheit ein Convolutional Neural Network umfassen, mit dessen Hilfe z.B. die visuellen Merkmale aus den aufgenommenen Bildern extrahiert werden, eine Gesichtserkennung durchgeführt wird oder die Separierung der Audiosignale auf die einzelnen Benutzer durchgeführt wird. Des Weiteren kann die Rechnereinheit beispielsweise einen Hardware-Beschleuniger für künstliche Intelligenz umfassen, mit dessen Hilfe die Audiosignale in maschinenlesbare Form konvertiert werden, eine Änderung der Benutzer erkannt wird, oder die Identifikation des Benutzers durchgeführt wird. Der Hardware-Beschleuniger für künstliche Intelligenz ist dabei vorzugsweise mit einem oder mehreren der Sensoren, beispielsweise dem Mikrofon der einer Kamera, verbunden. Der Hardware-Beschleuniger für künstliche Intelligenz kann dabei derart ausgeführt sein, dass Audiosignale und/oder Bilder nicht gespeichert werden und nur Ergebnisse der Identifikation weitergeleitet werden. Ferner kann die Rechnereinheit einen Datenbank-Controller umfassen, der die Datenbank und/oder die Benutzerdatenbank betreibt. Darüber hinaus kann die Rechnereinheit einen Controller für die zentrale Programmsteuerung umfassen, der beispielsweise die erkannten Sprachbefehle zur Ausführung, z.B. an ein Fahrzeugnetzwerk, weiterleitet.

In einigen Ausführungsformen umfasst das System zur Sprachsteuerung ferner zumindest eine Nahinfrarotkamera und eine Nahinfrarotlichtquelle. Die Nahinfrarotlichtquelle dient dabei der Beleuchtung des vorgegebenen Bereichs bei Dunkelheit. Die Nahinfrarotkamera nimmt Bilder der Benutzer auf, die zur Identifikation der Benutzer, zur Zuordnung der Audiosignale zu den einzelnen Benutzern und/oder zur Erfassung der Änderung der Benutzer verwendet werden.

Ein weiterer Aspekt der Erfindung betrifft ein Fahrzeug mit einem System zur Sprachsteuerung gemäß der vorangegangenen Beschreibung.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
Fig. 1 eine schematische Draufsicht auf ein Ausführungsbeispiel eines Fahrzeugs,
Fig. 2 ein Flussdiagramm eines Teils eines Verfahrens zur Sprachsteuerung,
Fig. 3 ein Flussdiagramm eines weiteren Teils eines Verfahrens zur Sprachsteuerung und
Fig. 4 ein Flussdiagramm eines nochmals weiteren Teils eines Verfahrens zur Sprachsteuerung.

### Detaillierte Beschreibung von Ausführungsformen

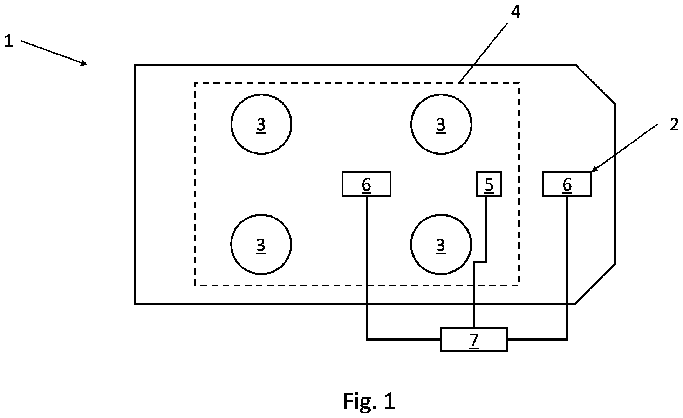

Figur 1 zeigt eine schematische Draufsicht auf ein Ausführungsbeispiel eines Fahrzeugs 1, das hier als Personenkraftwagen dargestellt ist. Das Fahrzeug 1 umfasst ein System zur Sprachsteuerung 2. Unter Sprachsteuerung wird dabei die Steuerung von Funktionen mittels Spracheingaben verstanden, wobei es sich hier um Funktionen des Fahrzeugs 1 handelt. Funktionen des Fahrzeugs 1, die mittels der Sprachsteuerung gesteuert werden können, sind beispielsweise Entertainment-Funktionen wie eine Musikwiedergabe oder Telefonie, aber auch Fahrfunktionen wie die Geschwindigkeitseinstellung eines Tempomaten oder Funktionen des teilautonomen oder autonomen Fahrens. Das vorliegende System zur Sprachsteuerung 2 ist dabei derart ausgebildet, dass es mehrere Benutzer 3 verwalten kann, die sich in einem vorgegebenen Bereich 4 des Fahrzeugs 1 befinden. Der vorgegebene Bereich 4 ist in diesem Ausführungsbeispiel der Fahrzeuginnenraum.

Das System zur Sprachsteuerung 2 umfasst ein Mikrofon 5 zum Erfassen von Audiosignalen. Mittels des Mikrofons 5 werden unter anderem von den Benutzern 3 gesprochene Befehle zur Sprachsteuerung erfasst. Des Weiteren umfasst das System zur Sprachsteuerung 2 zwei Nahinfrarotkameras 6 mit entsprechenden Nahinfrarotlichtquellen, die der Übersichtlichkeit halber hier nicht dargestellt sind. Die Nahinfrarotlichtquellen beleuchten dabei in der Dunkelheit die Benutzer 3, wobei die Benutzer 3 nicht geblendet oder durch das Nahinfrarotlicht abgelenkt werden und die Nahinfrarotkameras 6 eine ausreichende Beleuchtung zum Erfassen von Bildern der Benutzer 3 haben. Im vorliegenden Ausführungsbeispiel sind für beide Fahrgastreihen jeweils eine Nahinfrarotkamera 6 vorgesehen, um die Benutzer 3 gut zu erfassen. Es sind aber auch Ausführungsbeispiele mit nur einer Nahinfrarotkamera 6 oder mit mehr als zwei Nahinfrarotkameras 6 denkbar. Dabei dienen die von den Nahinfrarotkameras 6 aufgenommenen Bilder sowohl der Identifizierung der Benutzer 3 als auch der Zuordnung der vom Mikrofon 5 aufgenommenen Audiosignale zu den einzelnen Benutzern 3.

Das System zur Sprachsteuerung 2 kann ferner weitere Sensoren aufweisen, wie beispielsweise zusätzliche Mikrofone, Stereokameras zur dreidimensionalen Erfassung, Kameras im Bereich des sichtbaren Lichts, Drucksensoren in den Sitzen und/oder Anschnallgurtsensoren. Die Signale dieser Sensoren können dann ebenfalls zur Identifizierung der Benutzer 3 und/oder der Zuordnung der Audiosignale zu den einzelnen Benutzern 3 verwendet werden.

Alle Sensoren, insbesondere also das Mikrofon 5 und die Nahinfrarotkameras 6, sind dabei mit einer Rechnereinheit 7 verbunden.

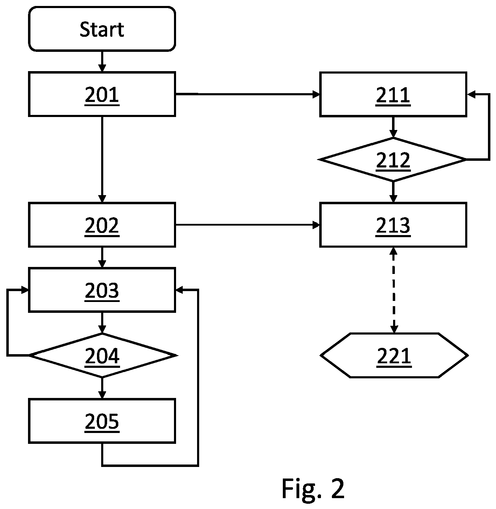

Figur 2 zeigt ein Flussdiagramm eines Teils eines Verfahrens zur Sprachsteuerung. Nach dem Start wird eine Benutzerdetektion 201 auf Basis der von den Kameras aufgenommenen Daten durchgeführt. Diese Benutzerdetektion 201 wird dabei beispielsweise mittels künstlicher Intelligenz, beispielsweise Deep Learning, durchgeführt.

Mit Hilfe der bei der Benutzerdetektion 201 erhaltenen Daten sowie auf Basis von empfangenen Audiosignalen wird eine Zuordnung 202 von Audiosignalen zu den einzelnen Benutzern 3 durchgeführt. Um diese Zuordnung 202 zu verbessern können zusätzlich beispielsweise Störgeräusche minimiert werden.

Auf den so den Benutzern 3 zugeordneten Audiosignalen wird eine Schlüsselworterkennung 203 durchgeführt, die in den Audiosignalen enthaltene Schlüsselwörter erkennt. Die Schlüsselworterkennung 203 basiert dabei beispielsweise auf Natural Language Processing.

Im Entscheidungsschritt 204 wird geprüft, ob ein Schlüsselwort erkannt wurde. Wurde kein Schlüsselwort erkannt, wird mit der Schlüsselworterkennung 203 fortgefahren. Wurde hingegen ein Schlüsselwort erkannt, wird eine Sprachbefehlsverarbeitung 205 gestartet. Sobald die Sprachbefehlsverarbeitung 205 beendet ist, wird weiter die Schlüsselworterkennung 203 durchgeführt.

Des Weiteren wird mit Hilfe der bei der Benutzerdetektion 201 erhaltenen Daten eine Änderungserfassung 211 durchgeführt, bei der Änderungen der Benutzer 3, beispielsweise ein Wechsel der Position, ein Verlassen des Fahrzeugs 1 oder ein Einsteigen in das Fahrzeugs 1, erfasst werden.

Im Entscheidungsschritt 212 wird geprüft, ob eine Änderung der Benutzer 3 eingetreten ist. Falls nicht, so wird die Änderungserfassung 211 weiter ausgeführt. Falls eine Änderung aufgetreten ist, wird eine Benutzeridentifikation 213 durchgeführt, unter anderem auf Basis der Bilddaten und dem dem Benutzer 3 zugeordneten Audiosignal. Die Benutzeridentifikation 213 greift dabei des Weiteren auf eine Datenbank 221 zurück, in der die Merkmale von registrierten Benutzern gespeichert sind.

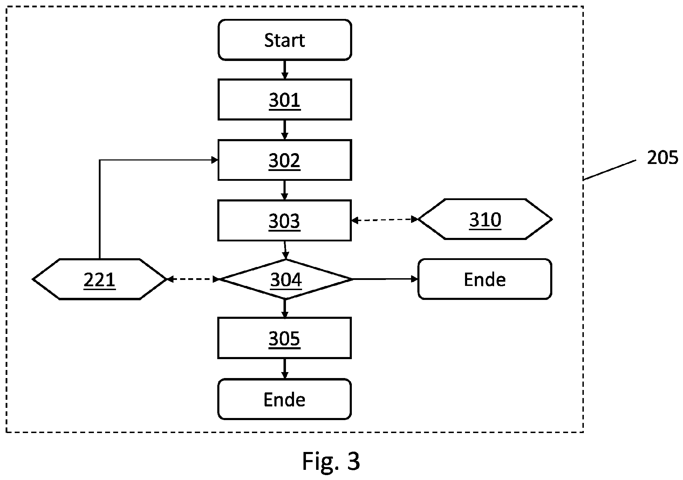

Figur 3 zeigt ein Flussdiagramm der Sprachbefehlsverarbeitung 205. Zunächst erfolgt eine Konvertierung 301 der Audiosignale in eine maschinenlesbare Form, die beispielsweise mittels Natural Language Processing durchgeführt wird.

Sodann erfolgt eine Zuordnung 302 der mittels der Konvertierung 301 erzeugten Audiosignale in maschinenlesbarer Form zu den einzelnen Benutzern 3. Für diese Zuordnung 302 wird dabei auf die in der Datenbank 221 gespeicherten Merkmale der registrierten Benutzer zurückgegriffen.

Auf den Audiosignalen in maschinenlesbarer Form wird dann eine Erkennung 303 von Sprachbefehlen und des zugehörigen Kontexts durchgeführt, vorzugsweise mittels künstlicher Intelligenz. Diese Erkennung 303 kann zusätzlich verbessert werden, indem eine Historie 310 der zuletzt gesprochenen Sprachbefehle und/oder der Konversation zwischen den Benutzern 3 berücksichtigt wird.

Ist die Erkennung 303 der Sprachbefehle abgeschlossen, findet eine Prüfung 304 statt, ob der Benutzer 3, dem das Audiosignal zugeordnet wurde, die erforderlichen Zugriffsrechte hat. Für diese Prüfung wird auf die Datenbank 221 zurückgegriffen, in der in diesem Ausführungsbeispiel auch die Zugriffsrechte verwaltet sind. Alternativ hierzu könnte auf eine separate Benutzerdatenbank zurückgegriffen werden, wobei in der Benutzerdatenbank die Zugriffsrechte und in der Datenbank 221 die Merkmale der Benutzer 3 gespeichert sind.

Besitzt der Benutzer 3 die für die Ausführung der Funktion notwendigen Rechte nicht, so wird die Sprachbefehlsverarbeitung 205 beendet. Besitzt hingegen der Benutzer 3 die für die Ausführung der Funktion erforderlichen Rechte, so findet eines Ausführung 305 des Sprachbefehls statt und anschließend wird die Sprachbefehlsverarbeitung 205 beendet.

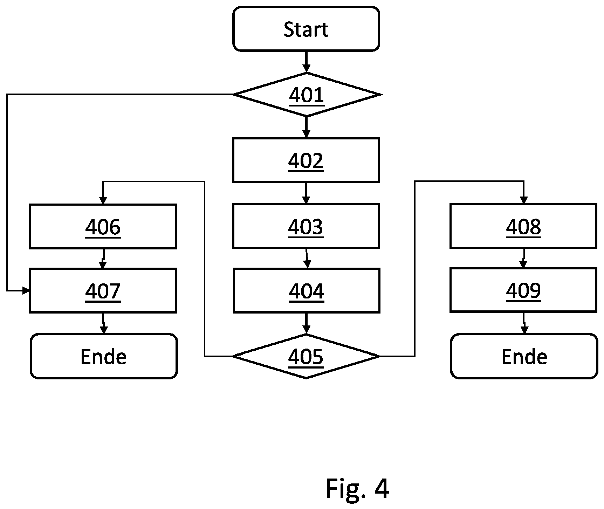

In Figur 4 wird ein Flussdiagramm eines Ausführungsbeispiels eines Verfahrens zur Sprachsteuerung gezeigt, bei dem die Freischaltungen von Funktionen mittels eines Tokens erfolgt. Die Analyse der Audiosignale ist zu Beginn dieses Flussdiagramms dabei schon abgeschlossen. Es findet nun eine Prüfung 401 statt, ob für den Benutzer 3, dem ein Audiosignal mit Sprachbefehl zugeordnet wurde, ein Token existiert. Falls ja, wird eine Übertragung 407 des Tokens an die dem Sprachbefehl entsprechende Funktion durchgeführt. Der Token enthält dabei Informationen über die Zugriffsrechte des Benutzers 3, so dass die Funktion die Überprüfung übernehmen kann, ob der Sprachbefehl ausgeführt wird oder nicht.

Ist hingegen noch kein Token für den Benutzer 3 vorhanden, findet zunächst eine Berechnung 402 eines Merkmalsvektors für den Benutzer 3 statt. Für diesen Merkmalsvektor findet eine Übermittlung 403 des Merkmalsvektors an einen der Datenbank 221 zugeordneten Controller statt.

Für den übermittelten Merkmalsvektor findet nun eine Bestimmung 404 des Abstands zwischen dem Merkmalsvektor des Benutzers und den anderen in der Datenbank 221 gespeicherten Merkmalsvektoren von registrierten Benutzern statt. Dabei wird der Merkmalsvektor von registrierten Benutzern ausgewählt, der den geringsten Abstand zum Merkmalsvektor des Benutzers 3 hat.

Sodann wird eine Überprüfung 405 durchgeführt, ob der Abstand zwischen dem Merkmalsvektor des Benutzers 3 und dem Merkmalsvektor des registrierten Benutzers, der den kleinsten Abstand zum Merkmalsvektor des Benutzers 3 hat, kleiner als eine vorgegebene Schwelle ist. Falls dies der Fall ist, wird eine Generierung 406 eines neuen Tokens für den Benutzer 3 durchgeführt. Dieser Token ist dabei vorzugsweise verschlüsselt und/oder mit einer Lebensdauer versehen. Für den neuen Token wird dann die Übertragung 407 an die dem Sprachbefehl entsprechende Funktion durchgeführt. Ist hingegen der Abstand größer als die vorgegebene Schwelle, so findet eine Bereitstellung 408 eines Tokens mit Standardzugriffsrechten und eine anschließende Übertragung 409 dieses Tokens an die entsprechende Funktion statt. In beiden Fällen kann die Funktion die Überprüfung übernehmen, ob genügend Zugriffsrechte zum Ausführen des Sprachbefehls vorhanden sind.

### Bezugszeichenliste

- 1: Fahrzeug
- 2: System zur Sprachsteuerung
- 3: Benutzer
- 4: vorgegebener Bereich
- 5: Mikrofon
- 6: Nahinfrarotkamera
- 7: Rechnereinheit
- 201: Benutzerdetektion
- 202: Zuordnung
- 203: Schlüsselworterkennung
- 204: Entscheidungsschritt
- 205: Sprachbefehlsverarbeitung
- 211: Änderungserfassung
- 212: Entscheidungsschritt
- 213: Benutzeridentifikation
- 221: Datenbank
- 301: Konvertierung
- 302: Zuordnung
- 303: Erkennung
- 304: Prüfung
- 305: Ausführung
- 310: Historie
- 401: Prüfung
- 402: Berechnung
- 403: Übermittlung
- 404: Bestimmung
- 405: Überprüfung
- 406: Generierung
- 407: Übertragung
- 408: Bereitstellung
- 409: Übertragung

## Patentansprüche

1. Verfahren zur Sprachsteuerung in einem Fahrzeug (1), wobei in einem vorgegebenen Bereich (4), insbesondere in einem Fahrzeuginnenraum, in dem sich Benutzer (3) befinden können,
eine Identifikation (213) von Benutzern (3) durchgeführt wird, indem Merkmale der Benutzer (3) erfasst werden und die Merkmale mit in einer Datenbank (221) gespeicherten Merkmalen von registrierten Benutzern (3) verglichen werden, wobei jeder Benutzer (3) als registrierter Benutzer (3) erkannt oder als unbekannter Benutzer (3) eingestuft wird;
jedem Benutzer (3) in Abhängigkeit von der Identifikation (213) der Benutzer (3) Zugriffsrechte zugeordnet werden, wobei die Zugriffsrechte die Berechtigung von Benutzern (3) zur Ausführung von Sprachbefehlen umfassen;
Audiosignale mittels zumindest eines Mikrofons (5) erfasst werden;
die Audiosignale bearbeitet werden, wobei die Audiosignale den einzelnen Benutzern (3) zugeordnet (302) werden, die Audiosignale in maschinenlesbare Form konvertiert (301) werden und eine Analyse der Audiosignale auf Sprachbefehle durchgeführt wird;
erkannte Sprachbefehle auf die Zugriffsrechte des Benutzers (3) geprüft werden; und
falls die Zugriffsrechte eine Ausführung der Sprachbefehle zulassen, die Sprachbefehle zur Ausführung angeordnet werden, **dadurch gekennzeichnet, dass** wenn ein Notfall erkannt wird, Zugriffsrechte auf einen anderen Benutzer (3) übertragen werden und/oder Sprachbefehle auch ohne entsprechende Zugriffsrechte ausgeführt werden.

2. Verfahren nach Anspruch 1, wobei ein Notfall eine Schläfrigkeit, Unaufmerksamkeit oder ein medizinischer Notfall eines Benutzers ist, und sofern in diesem Fall kein anderer im vorgegebenen Raum befindlicher Benutzer über notwendige Zugriffsrechte für Fahrfunktionen eines Fahrzeugs verfügt, eine Übertragung der Zugriffsrechte auf einen oder mehrere weitere Benutzer stattfindet, um das Fahrzeug anhalten zu können und so einen Unfall zu vermeiden.

3. Verfahren nach Anspruch 1 oder 2, wobei die Identifikation (213) der Benutzer (3) mittels Bilder, insbesondere im Bereich des sichtbaren Spektrums und/oder im Nahinfrarot, und/oder mittels Audiosignalen durchgeführt wird.

4. Verfahren nach einem der Ansprüche 1 bis 3, wobei jedem Benutzer (3) ein Merkmalsvektor zugeordnet wird, wobei der Merkmalsvektor visuelle Merkmale, semantische Merkmale und/oder auditive Merkmale umfasst und die Identifikation des Benutzers (3) über einen Abstand zwischen dem dem Benutzer (3) zugeordneten Merkmalsvektor und in der Datenbank gespeicherten Merkmalsvektoren durchgeführt wird.

5. Verfahren nach einem der Ansprüche 1 bis 4, wobei
eine Änderung der Benutzer (3), insbesondere mittels eines Drucksensors in einem Sitz des vorgegebenen Bereichs (4), eines Anschnallgurt-Sensors, einer Kamera im sichtbaren Spektrum und/oder im Nahinfrarot und/oder der Audiosignale, erfasst wird und
falls ein neuer Benutzer (3) hinzugekommen ist, eine Identifikation (213) des Benutzers (3) durchgeführt wird.

6. Verfahren nach einem der Ansprüche 1 bis 5, wobei einem als registrierten Benutzer (3) erkannten Benutzer (3) in der Datenbank (221) oder in einer Benutzerdatenbank Zugriffsrechte zugeordnet werden und einem unbekannten Benutzer (3) Standardzugriffsrechte zugeordnet werden,

7. Verfahren nach Anspruch 6, wobei zur Konfiguration der Einträge der Datenbank bzw. der Benutzerdatenbank Sicherheitsvoraussetzungen und/oder eine Autorisierung erfüllt sein müssen.

8. Verfahren nach einem der Ansprüche 1 bis 7, wobei bei der Bearbeitung der Audiosignale Störgeräusche minimiert werden, und/oder die Bearbeitung der Audiosignale zumindest teilweise mittels Deep Learning und/oder unter Zuhilfenahme des Kontexts erfolgt.

9. Verfahren nach einem der Ansprüche 1 bis 8, wobei die Audiosignale auf vorgegebene Schlüsselwörter durchsucht werden und die Analyse der Audiosignale auf Sprachbefehle nur nach einem erkannten Schlüsselwort durchgeführt wird.

10. Verfahren nach Anspruch 9, wobei die Schlüsselwörter für separate Benutzer (3) individuell vergebbar sind und vorzugsweise bei der Zuordnung der Audiosignale zu den Benutzern (3) auch die Schlüsselwörter berücksichtigt werden.

11. Verfahren nach einem der Ansprüche 1 bis 10, wobei bei fehlenden Zugriffsrechten eine Fehlermeldung ausgegeben wird und/oder die Verifizierung durch einen berechtigten Benutzer (3) ermöglicht wird .

12. Verfahren nach einem der Ansprüche 1 bis 11, wobei für einen erkannten Benutzer (3) ein Token erstellt wird (406), der die Zugriffsrechte, einen Zeitstempel der Erzeugung und/oder eine Lebensdauer umfasst und vorzugsweise verschlüsselt ist, und bei der Anordnung zur Ausführung eines Befehls der Token mit übermittelt wird.

13. System zur Sprachsteuerung in einem Fahrzeug (1), das zum Ausführen des Verfahrens nach einem der Ansprüche 1 bis 12 ausgebildet ist, umfassend
zumindest ein Mikrofon (5) zum Erfassen der Audiosignale und
zumindest eine Rechnereinheit (7).

14. System nach Anspruch 13, ferner umfassend zumindest eine Nahinfrarotkamera (6) und eine Nahinfrarotlichtquelle.

15. Fahrzeug, umfassend ein System zur Sprachsteuerung (2) nach Anspruch 13 oder 14.

## Claims

1. A voice control method in a vehicle (1), wherein in a predefined region (4), in particular in a vehicle interior, in which users (3) can be located,
an identification (213) of users (3) is carried out by acquiring features of the users (3) and comparing the features with features of registered users (3) stored in a database (221), each user (3) being identified as a registered user (3) or being classified as an unknown user (3);
access rights are assigned to each user (3) dependent on the identification (213) of the users (3), wherein the access rights comprise the authorization of users (3) to execute voice commands;
audio signals are acquired by means of at least one microphone (5);
the audio signals are processed, wherein the audio signals are assigned (302) to the individual users (3), the audio signals are converted (301) into machine-readable form, and an analysis of the audio signals for voice commands is carried out; detected voice commands are checked for the access rights of the user (3); and if the access rights allow the voice commands to be executed, the voice commands are ordered to be executed, **characterized in that** if an emergency is detected, access rights are transferred to another user (3) and/or voice commands are also executed without corresponding access rights.

2. The method as claimed in claim 1, wherein an emergency is a drowsiness, inattention or a medical emergency of a user, and if, in this case, no other user located in the predetermined space has necessary access rights for driving functions of a vehicle, a transfer of the access rights to one or more further users takes place in order to be able to stop the vehicle and thus avoid an accident.

3. The method as claimed in claim 1 or 2, wherein the identification (213) of the users (3) is carried out by means of images, in particular in the range of the visible spectrum and/or in the near infrared, and/or by means of audio signals.

4. The method as claimed in any one of claims 1 to 3, wherein each user (3) is assigned a feature vector, wherein the feature vector comprises visual features, semantic features and/or auditory features, and the identification of the user (3) is carried out via a distance between the feature vector assigned to the user (3) and feature vectors stored in the database.

5. The method as claimed in any one of claims 1 to 4, wherein
a change in the user (3) is acquired, in particular by means of a pressure sensor in a seat of the predetermined region (4), a seat belt sensor, a camera in the visible spectrum and/or in the near infrared and/or the audio signals, and
if a new user (3) has joined, an identification (213) of the user (3) is carried out.

6. The method as claimed in any one of claims 1 to 5, wherein a user (3) identified as a registered user (3) is assigned access rights in the database (221) or in a user database and an unknown user (3) is assigned standard access rights.

7. The method as claimed in claim 6, wherein security requirements and/or an authorization must be met in order to configure the entries in the database or in the user database.

8. The method as claimed in any one of claims 1 to 7, wherein noise interference is minimized during the processing of the audio signals, and/or the audio signals are processed at least in part by means of deep learning and/or by using the context.

9. The method as claimed in any one of claims 1 to 8, wherein the audio signals are searched for predefined keywords and the analysis of the audio signals for voice commands is carried out only for a recognized keyword.

10. The method as claimed in claim 9, wherein the keywords are individually allocatable for separate users (3) and the keywords are preferably also taken into account when assigning the audio signals to the users (3).

11. The method as claimed in any one of claims 1 to 10, wherein an error message is output in the event of a lack of access rights and/or verification by an authorized user (3) is made possible.

12. The method as claimed in any one of claims 1 to 11, wherein a token is created (406) for a recognized user (3), said token comprising the access rights, a time stamp of generation and/or a lifetime and preferably being encrypted, and being concomitantly transmitted when an order is made to execute the tokens.

13. A voice control system in a vehicle (1) which is designed to execute the method as claimed in any one of claims 1 to 12, comprising
at least one microphone (5) for acquiring the audio signals, and
at least one computer unit (7).

14. The system as claimed in claim 13, further comprising at least one near-infrared camera (6) and one near-infrared light source.

15. A vehicle comprising a voice control system (2) as claimed in claim 13 or 14.

## Revendications

1. Procédé de commande vocale dans un véhicule (1), dans lequel, dans une zone prédéfinie (4), en particulier dans un habitacle de véhicule, dans lequel peuvent se trouver des utilisateurs (3),
une identification (213) d'utilisateurs (3) est réalisée en ce que des caractéristiques des utilisateurs (3) sont acquises et que les caractéristiques sont comparées avec des caractéristiques d'utilisateurs (3) enregistrés, stockées dans une base de données (221), dans lequel chaque utilisateur (3) est reconnu comme utilisateur enregistré (3) ou classé comme utilisateur inconnu (3) ;
des droits d'accès sont attribués à chaque utilisateur (3) en fonction de l'identification (213) des utilisateurs (3), dans lequel les droits d'accès comprennent l'autorisation des utilisateurs (3) d'exécuter des commandes vocales ;
des signaux audio sont acquis au moyen d'au moins un microphone (5) ;
les signaux audio sont traités, dans lequel les signaux audio sont attribués (302) aux différents utilisateurs (3), les signaux audio sont convertis (301) en une forme lisible par machine et une analyse des signaux audio quant à des commandes vocales est effectuée ;
les commandes vocales reconnues sont vérifiées au regard des droits d'accès de l'utilisateur (3) ; et
si les droits d'accès autorisent une exécution des commandes vocales, les commandes vocales sont ordonnées pour exécution, **caractérisé en ce que**, lorsqu'une situation d'urgence est détectée, des droits d'accès sont transférés à un autre utilisateur (3) et/ou des commandes vocales sont exécutées également en l'absence des droits d'accès correspondants.

2. Procédé selon la revendication 1, dans lequel une situation d'urgence est une somnolence,
une inattention ou une urgence médicale d'un utilisateur, et dans la mesure où,
dans ce cas, aucun autre utilisateur se trouvant dans la zone prédéfinie ne dispose des droits d'accès nécessaires pour des fonctions de conduite d'un véhicule, un transfert des droits d'accès vers un ou plusieurs autres utilisateurs a lieu afin de pouvoir arrêter le véhicule et ainsi éviter un accident.

3. Procédé selon la revendication 1 ou 2, dans lequel l'identification (213) des utilisateurs (3) est réalisée au moyen d'images, en particulier dans la plage du spectre visible et/ou dans le proche infrarouge, et/ou au moyen de signaux audio.

4. Procédé selon l'une quelconque des revendications 1 à 3, dans lequel un vecteur de caractéristiques est attribué à chaque utilisateur (3), dans lequel le vecteur de caractéristiques comprend des caractéristiques visuelles, des caractéristiques sémantiques et/ou des caractéristiques auditives, et l'identification de l'utilisateur (3) est réalisée au moyen d'une distance entre le vecteur de caractéristiques attribué à l'utilisateur (3) et des vecteurs de caractéristiques stockés dans la base de données.

5. Procédé selon l'une quelconque des revendications 1 à 4, dans lequel
une modification des utilisateurs (3), en particulier au moyen d'un capteur de pression dans un siège de la zone prédéfinie (4), d'un capteur de ceinture de sécurité, d'une caméra dans le spectre visible et/ou dans le proche infrarouge et/ou des signaux audio, est détectée ; et
dans le cas où un nouvel utilisateur (3) s'est ajouté, une identification (213) de l'utilisateur (3) est effectuée.

6. Procédé selon l'une quelconque des revendications 1 à 5, dans lequel des droits d'accès sont attribués, dans la base de données (221) ou dans une base de données d'utilisateurs, à un utilisateur (3) reconnu comme utilisateur enregistré (3), et des droits d'accès standard sont attribués à un utilisateur (3) inconnu.

7. Procédé selon la revendication 6, dans lequel, pour la configuration des entrées de la base de données ou de la base de données d'utilisateurs, des exigences de sécurité et/ou une autorisation doivent être satisfaites.

8. Procédé selon l'une quelconque des revendications 1 à 7, dans lequel, lors du traitement des signaux audio, des bruits parasites sont réduits au mieux, et/ou le traitement des signaux audio est effectué au moins partiellement au moyen de l'apprentissage profond et/ou en recourant au contexte.

9. Procédé selon l'une quelconque des revendications 1 à 8, dans lequel les signaux audio sont analysés à la recherche de mots-clés prédéfinis et l'analyse des signaux audio quant à des commandes vocales n'est effectuée qu'après détection d'un mot-clé.

10. Procédé selon la revendication 9, dans lequel les mots-clés peuvent être attribués individuellement à des utilisateurs (3) distincts et sont de préférence également pris en compte lors de l'attribution des signaux audio aux utilisateurs (3).

11. Procédé selon l'une quelconque des revendications 1 à 10, dans lequel, en cas de droits d'accès manquants, un message d'erreur est émis et/ou la vérification par un utilisateur autorisé (3) est activée.

12. Procédé selon l'une quelconque des revendications 1 à 11, dans lequel, pour un utilisateur (3) reconnu, un jeton (406) est créé, lequel comprend les droits d'accès, un horodatage de création et/ou une durée de vie et est de préférence chiffré, et lors de l'ordre d'exécution d'une commande, le jeton est transmis avec celle-ci.

13. Système de commande vocale dans un véhicule (1), conçu pour exécuter le procédé selon l'une quelconque des revendications 1 à 12, comprenant au moins un microphone (5) pour la capture des signaux audio, et
au moins une unité de calcul (7).

14. Système selon la revendication 13, comprenant en outre au moins une caméra proche infrarouge (6) et une source lumineuse proche infrarouge.

15. Véhicule comprenant un système de commande vocale (2) selon la revendication 13 ou 14.
